# EUROPEAN PATENT APPLICATION

(11) **EP 4 270 083 A1**
(43) Date of publication of application: **01.11.2023**
(21) Application number: 23169987.7
(22) Date of filing: 26.04.2023
(51) Int. Cl.: G02B 21/00, G02B 21/24, G02B 27/18

(54) **MICROSCOPE SYSTEM, PROJECTION UNIT, AND IMAGE PROJECTION METHOD**

(30) Priority: 28.04.2022 JP 2022074488
(71) Applicant: Evident Corporation, Nagano 399-0495 (JP)
(72) Inventor: SAKURAI, Ayumu, Nagano, 3990495 (JP)
(74) Representative: Gunzelmann, Rainer

(57) **Abstract**

A microscope system (100) includes an observation optical system (110) that forms an optical image of a specimen (S) on an object side of an ocular lens (111); a projection device ((130) that superimposes information on an image plane (P) on which the optical image is formed, an imaging device (120) that is provided on an imaging optical path branched from an observation optical path, and a control device (200). The control device (200) controls the projection device (130) to superimpose, on the image plane (P), focus information based on a captured image of the specimen (S) acquired by the imaging device (120) and analysis information regarding a result of image analysis on the captured image, the image analysis being different from focus analysis.

## Description

### BACKGROUND OF THE INVENTION

### TECHNICAL FIELD

The disclosure of the present specification relates to a microscope system, a projection unit, and an image projection method.

### DESCRIPTION OF THE RELATED ART

In recent years, artificial intelligence (AI) is expected to support work performed using a microscope. As a microscope capable of providing such AI support, an augmented reality (AR) microscope is known.

The AR microscope is a microscope that displays auxiliary information in such a way as to be superimposed on an optical image of a specimen observed using an ocular lens, and is described in, for example, WO 2020/066041 A. The auxiliary information displayed by the AR microscope is typically generated by analyzing a captured image obtained by imaging the specimen. In particular, it is possible to provide a microscope user with advanced support by AI by using an AI technology such as deep learning for analysis of a captured image.

### SUMMARY OF THE INVENTION

By the way, in visual observation, the depth of focus is larger than that in camera imaging due to an adjustment ability of the eyes. For this reason, even if a user of the AR microscope focuses on a sample by visual observation, the camera is not in focus, and thus, a captured image may be blurred.

Such a problem also occurs in a microscope having an observation optical path for visual observation and an imaging optical path according to the related art, but in the microscope according to the related art, it is possible to check whether or not a captured image displayed on a monitor is in focus when the imaging optical path is used. On the other hand, the AR microscope has an advantage of enabling efficient work by reducing opportunities that a line of sight of the user alternates between the ocular lens and the monitor. Therefore, unlike the microscope according to the related art, it is not desirable to take measures such as checking a captured image every time with the monitor.

In view of the above circumstances, an object of one aspect of the present invention is to provide a technology for coping with an out-of-focus of an imaging device in an AR microscope.

A microscope system according to an aspect of the present invention includes: an observation optical system that forms an optical image of a specimen on an object side of an ocular lens; a superimposition device that superimposes information on an image plane on which the optical image is formed; an imaging device that is provided on an imaging optical path branched from an optical path of the observation optical system; and a control device that controls the superimposition device to superimpose, on the image plane, focus information regarding a focus state of the imaging device based on a captured image of the specimen acquired by the imaging device, and analysis information regarding a result of image analysis on the captured image, the image analysis being different from focus analysis.

A projection unit according to one aspect of the present invention is a projection unit for a microscope system, the projection unit including: a superimposition device that superimposes information on an image plane on which an optical image of a specimen is formed by an observation optical system included in the microscope system, the image plane being positioned on an object side of an ocular lens included in the microscope system; an imaging device that is provided on an imaging optical path branched from an optical path of the observation optical system; and a control device that controls the superimposition device to superimpose, on the image plane, focus information regarding a focus state of the imaging device based on a captured image of the specimen acquired by the imaging device, and analysis information regarding a result of image analysis on the captured image, the image analysis being different from focus analysis.

An image projection method according to one aspect of the present invention is an image projection method executed by a microscope system including an observation optical system, the image projection method including: forming an optical image of a specimen on an object side of an ocular lens included in the observation optical system; and superimposing, on an image plane, focus information regarding a focus state of an imaging device provided on an imaging optical path branched from an optical path of the observation optical system based on a captured image of the specimen acquired by the imaging device, and analysis information regarding a result of image analysis on the captured image, the image analysis being different from focus analysis.

According to the above aspect, it is possible to cope with an out-of-focus of an imaging device in an AR microscope.

### BRIEF DESCRIPTION OF THE DRAWINGS

FIG. 1 is a diagram illustrating a configuration of a microscope system according to an embodiment;
FIG. 2 is an example of a flowchart of image projection processing according to an embodiment;
FIG. 3 is an example of a flowchart of image projection processing according to a first embodiment;
FIG. 4 is an example of an optical image observed through an ocular lens;
FIG. 5 is an example of an image observed through the ocular lens according to the first embodiment;
FIG. 6 is an example of an image observed through the ocular lens according to a second embodiment;
FIG. 7 is an example of an image observed through the ocular lens according to a third embodiment;
FIG. 8 is an example of a flowchart of image projection processing according to a fourth embodiment;
FIG. 9 is an example of an image observed through the ocular lens according to the fourth embodiment;
FIG. 10 is an example of an image observed through the ocular lens according to a fifth embodiment;
FIG. 11 is an example of a flowchart of image projection processing according to a sixth embodiment;
FIG. 12 is an example of an image observed through the ocular lens in a case where a focus level is not sufficient;
FIG. 13 is an example of a flowchart of image projection processing according to a seventh embodiment;
FIG. 14 is an example of a flowchart of image projection processing according to an eighth embodiment;
FIG. 15 is an example of an image observed through the ocular lens according to the eighth embodiment;
FIG. 16 is a diagram illustrating a configuration of a microscope system according to another embodiment;
FIG. 17 is a diagram illustrating a configuration of a microscope system according to still another embodiment;
FIG. 18 is an example of an image observed through an ocular lens according to a modified example; and
FIG. 19 is a diagram illustrating a hardware configuration of a computer for implementing a control device.

### DETAILED DESCRIPTION

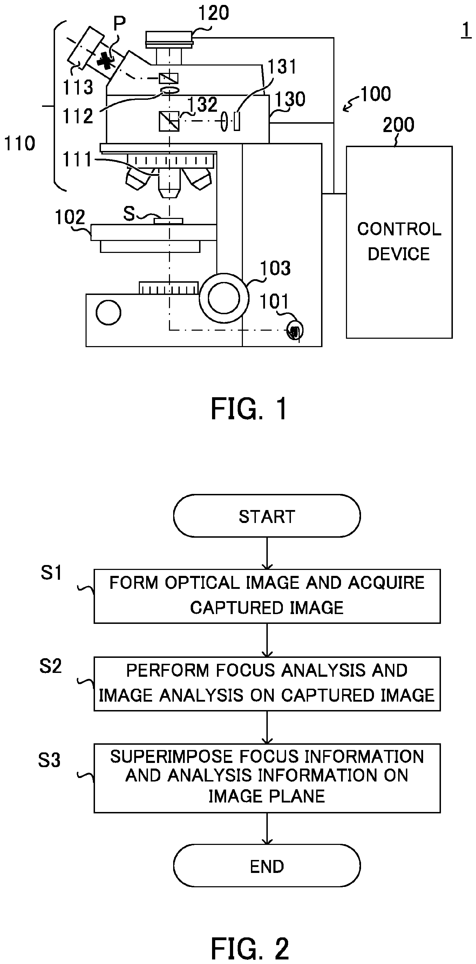

FIG. 1 is a diagram illustrating a configuration of a microscope system 1 according to an embodiment. The microscope system 1 is, for example, a microscope system used by a pathologist for pathological diagnosis. However, an application of the microscope system 1 is not limited thereto. The microscope system 1 is not limited to a biological microscope system, and may be an industrial microscope system.

The microscope system 1 includes at least an observation optical system 110 including an ocular lens 113, an imaging device 120, a projection device 131, and a control device 200. More specifically, as illustrated in FIG. 1, the microscope system 1 includes a microscope 100 and the control device 200 that controls the microscope 100.

The microscope 100 includes a light source 101, a stage 102, a focusing handle 103, the observation optical system 110, the imaging device 120, and a projection unit 130. The microscope 100 is an upright microscope in FIG. 1, but the microscope 100 may be an inverted microscope.

The observation optical system 110 forms an optical image of a specimen S arranged on the stage 102 on an object side of the ocular lens 113. More specifically, the observation optical system 110 includes an objective lens 111 and a tube lens 112, and the objective lens 111 and the tube lens 112 form the optical image of the specimen S illuminated with light from the light source 101 on an image plane P positioned on the object side of the ocular lens 113. An optical path of the observation optical system 110 from the stage 102 to the ocular lens 113 is hereinafter referred to as an observation optical path.

The imaging device 120 is, for example, a digital camera including an imaging element, and captures an image of the specimen S to acquire a captured image of the specimen S. The imaging device 120 is provided on an imaging optical path branched from the observation optical path. The imaging element included in the imaging device 120 is an image sensor using a charge-coupled device (CCD) or a complementary metal-oxide-semiconductor (CMOS).

The projection unit 130 is an intermediate tube type unit detachable from the microscope 100, and includes a projection device 131 and a beam splitter 132. The projection device 131 is an example of a superimposition device that superimposes information on the image plane P on which the optical image is formed, and is, for example, a DLP (registered trademark) projector using a DMD (registered trademark). However, the projection device 131 may be a liquid crystal projector using a liquid crystal panel. The beam splitter 132 is an optical path combining element that joins light from the projection device 131 to the optical path of the observation optical system 110.

The control device 200 controls the microscope 100. Details of the configuration of the control device 200 will be described below. Although the control device 200 is illustrated as a single device in FIG. 1, the control device 200 may be a set of two or more devices. The control device 200 may include, for example, a control box dedicated to microscope control and a general-purpose computer.

FIG. 2 is an example of a flowchart of image projection processing according to an embodiment. An image projection method of the microscope system 1 will be described below with reference to FIG. 2. By executing the image projection processing illustrated in FIG. 2, the above-described microscope system 1 can provide a microscope user with advanced support using image analysis performed by the computer when the microscope user looks into the ocular lens 113 and observes the specimen S.

First, the microscope system 1 forms the optical image of the specimen S and acquires the captured image of the specimen S (step S 1). In the observation optical path, the tube lens 112 condenses, on the image plane P, light from the specimen S taken in by the objective lens 111, so that the observation optical system 110 forms the optical image of the specimen S on the object side of the ocular lens 113. On the other hand, in the imaging optical path branched from the observation optical path, the imaging device 120 images the specimen S with light incident from the observation optical path, and acquires the captured image of the specimen S. The captured image acquired by the imaging device 120 is output to the control device 200.

Next, the microscope system 1 performs focus analysis and image analysis on the captured image (step S2). Here, the control device 200 executes a predetermined program to perform the focus analysis and the image analysis. The focus analysis is image analysis performed to specify a focus state of the imaging device 120. The image analysis performed together with the focus analysis is image analysis different from the focus analysis, and a content thereof is not particularly limited. The image analysis may be performed to obtain information for supporting work of the microscope user.

In step S2, the control device 200 performs the focus analysis on the captured image to specify, as the focus state of the imaging device 120, whether or not the imaging device 120 is focused on the specimen S, how focused the imaging device is (the focus level), and the like. A specific algorithm of the focus analysis may be any known algorithm, and is not particularly limited. For example, in a case where the type of the specimen S is known and an approximate contrast value at the time of focusing is also known, the focus state may be specified by calculating the contrast value of the image. Furthermore, in a case where a phase difference detection pixel is incorporated in the imaging device 120, the focus state may be specified based on an image plane phase difference detected by the phase difference detection pixel.

Thereafter, the control device 200 generates information regarding the specified focus state of the imaging device 120 (hereinafter, referred to as focus information). The focus information is information projected onto the image plane in step S3. Therefore, the focus information may be any information as long as the microscope user can visually recognize the focus state of the imaging device 120, and may be any information obtained by visualizing the focus state. A specific example of the focus information will be described in detail in an embodiment to be described below.

Furthermore, in step S2, the control device 200 also generates information regarding a result of the image analysis (hereinafter, referred to as analysis information) by performing the image analysis on the captured image. The image analysis is not particularly limited, but a trained model obtained by machine learning may be used. The image analysis may be, for example, image classification performed using a neural network model obtained by deep learning, object detection, segmentation, or a combination thereof.

In step S2, the control device 200 may perform the focus analysis and the image analysis at the same time. Alternatively, the control device 200 may perform one of the focus analysis and the image analysis first and the other later, that is, may sequentially perform the focus analysis and the image analysis. In this case, the subsequent processing may be performed only when a result of the preceding processing satisfies a certain condition. For example, the control device 200 may first perform the focus analysis, and further perform the image analysis when the focus state of the imaging device 120 obtained as a result satisfies a predetermined condition. Alternatively, the subsequent processing may be performed using a result of the preceding processing. For example, the control device 200 may first perform the image analysis, and further perform the focus analysis by using the analysis information obtained as a result.

Finally, the microscope system 1 superimposes the focus information and the analysis information on the image plane P (step S3). Here, the control device 200 controls the projection device 131 to superimpose the focus information and the analysis information acquired in step S2 on the image plane P.

In step S3, the control device 200 may control the projection device 131 in such a way that the focus information and the analysis information are simultaneously superimposed on the image plane P. That is, the control device 200 may cause the projection device 131 to superimpose an image including both the focus information and the analysis information on the image plane P.

In step S3, the control device 200 may control the projection device 131 to superimpose an image including at least one of the focus information or the analysis information on the image plane P. In this case, the control device 200 may control the projection device 131 to change the information included in the image to be superimposed on the image plane P according to the focus state of the imaging device 120. For example, when the focus state of the imaging device 120 satisfies a predetermined condition, the control device 200 may control the projection device 131 to superimpose an image including the analysis information or an image including the analysis information and the focus information on the image plane P. On the other hand, when the focus state of the imaging device 120 does not satisfy the predetermined condition, the control device 200 may control the projection device 131 to superimpose an image that does not include the analysis information, that is, an image including only the focus information, on the image plane P.

In step S3, the control device 200 may control the projection device 131 to superimpose all of the focus information and the analysis information, that is, the focus information and the analysis information regarding the entire region of the captured image, on the image plane P. Furthermore, the control device 200 may control the projection device 131 to superimpose a part of the focus information and the analysis information, that is, the focus information and the analysis information for a partial region of the captured image, on the image plane P. For example, the control device 200 may specify a region of the captured image in which the focus state of the imaging device 120 satisfies the predetermined condition, and superimpose an image including the analysis information for the region on a region of the image plane P that corresponds to the region of the captured image.

As described above, when the microscope system 1 executes the image projection processing illustrated in FIG. 2, the focus information is superimposed on the image plane on which the optical image of the specimen S is formed, in addition to the analysis information for supporting the work of the microscope user. When observing the optical image of the specimen S by looking into the ocular lens 113, the microscope user can easily grasp whether or not an out-of-focus caused by the fact that the depth of focus in camera imaging is smaller than that in visual observation has occurred in the imaging device 120 by checking the focus information.

The microscope user can determine reliability of the analysis information superimposed on the image plane by himself/herself by grasping the out-of-focus of the imaging device 120. Therefore, in a case where the out-of-focus is severe and it is estimated that the captured image is blurred, the microscopic user can carefully perform the work without excessively trusting the analysis information. As described above, with the microscope system 1, it is possible to cope with an out-of-focus by urging the microscopic user to perform work and make a determination carefully.

In addition, by grasping the out-of-focus, the microscope user can focus the imaging device 120 on the specimen S by operating the focusing handle 103 to move the stage 102 or the objective lens 111 up and down within a range in which the optical image is not blurred. As described above, with the microscope system 1, the microscope user can eliminate the out-of-focus of the imaging device 120 without taking his/her eyes off the ocular lens 113, thereby coping with the out-of-focus.

In particular, since a captured image suitable for the image analysis is provided to the control device 200 by eliminating an out-of-focus of the imaging device 120, the microscope system 1 can prevent the image analysis from being not appropriately performed by a blurred captured image or prevent the analysis information with low reliability from being projected on the image plane. Therefore, it is possible to sufficiently exhibit the original function of the AR microscope (the microscope system 1) and provide the microscope user with advanced support by the analysis information.

Hereinafter, a specific example of the image projection processing illustrated in FIG. 2 executed by the microscope system 1 will be described in each embodiment.

### (First Embodiment)

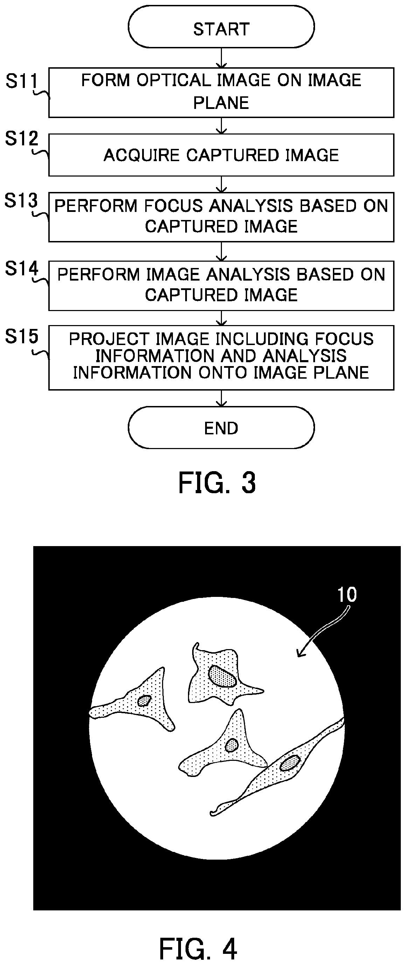

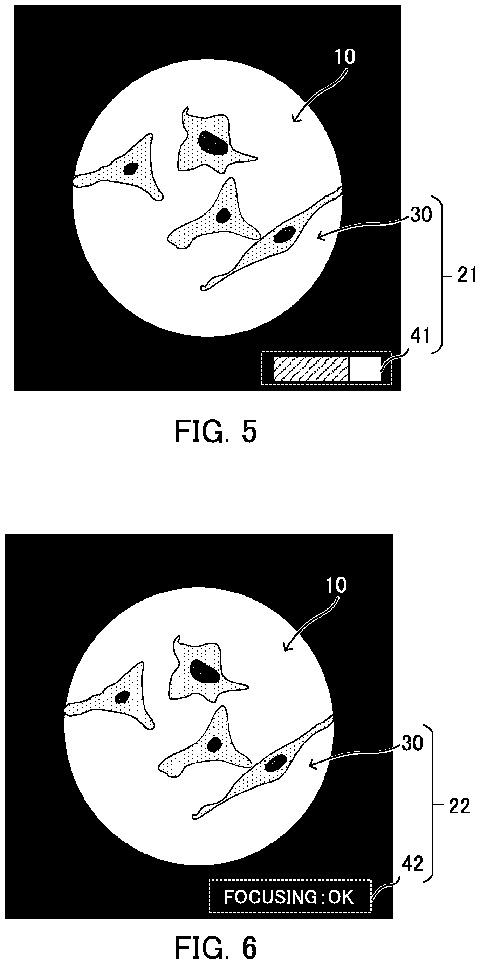

FIG. 3 is an example of a flowchart of the image projection processing according to the present embodiment. FIG. 4 is an example of an optical image observed through the ocular lens 113. FIG. 5 is an example of an image observed through the ocular lens 113 according to the present embodiment.

When the microscope system 1 starts the image projection processing illustrated in FIG. 3, first, the observation optical system 110 forms the optical image of the specimen S on the image plane P (step S 11). In step S 11, as illustrated in FIG. 4, the microscope user can observe only an optical image 10 by looking into the ocular lens 113.

Further, the imaging device 120 acquires the captured image of the specimen S (step S12). Thereafter, the control device 200 performs the focus analysis and the image analysis based on the captured image acquired in step S12, and generates the focus information and the analysis information (steps S 13 and S 14). The order of the processing of step S 13 and step S 14 is not limited to this example. The control device 200 may execute these processings at the same time or may perform the processing of step S14 before the processing of step S13.

In step S13, the control device 200 calculates, for example, the contrast value of the captured image by performing the focus analysis on the captured image. The contrast value of the captured image is not particularly limited, but may be calculated for the entire captured image, or may be calculated for a partial region of interest (for example, only the vicinity of the center of a visual field) in the captured image. Furthermore, the contrast value of the captured image may be calculated by averaging contrast values calculated for a plurality of regions into which the captured image is divided. Further, the control device 200 may normalize the calculated contrast value by using a reference value.

It is sufficient if the reference value is any contrast value as long as it can be determined that the imaging device 120 is focused on the specimen S, that is, the focus level is sufficiently high and the focus state of the imaging device 120 is an in-focus state. In addition, the reference value is desirably set to an appropriate value in advance for each type of the specimen S.

Thereafter, the control device 200 generates the focus information based on the contrast value. In the present embodiment, the control device 200 generates the focus information in such a way that the contrast value is visualized as an indicator indicating the focus state. The indicator is not particularly limited, but the contrast value may be indicated by, for example, the length of a bar. The focus information only needs to include the indicator, and may include additional information in addition to the indicator.

The control device 200 further performs the image analysis based on the captured image and generates the analysis information (step S14). Here, as the image analysis, the control device 200 performs inference processing of detecting an object in the image and a category of the object by using a neural network model trained by machine learning, and generates the analysis information in such a way that the position of the detected object of a predetermined category is marked. The inference processing is, for example, object detection or segmentation. In the following description, an example will be described in which the control device 200 generates the analysis information to be marked on a nucleus by using a trained model trained in advance to detect a cell and a nucleus of the cell in the image by machine learning.

Once the focus information and the analysis information are generated, the control device 200 controls the projection device 131 to project an image including the focus information and the analysis information onto the image plane P (step S 15). Here, the control device 200 outputs image data including the focus information generated in step S13 and the analysis information generated in step S14 to the projection device 131, so that the projection device 131 projects an auxiliary image 21 onto the image plane P as illustrated in FIG. 5. The auxiliary image is an image projected onto the image plane P by the projection device 131.

FIG. 5 illustrates a state in which the auxiliary image 21 including analysis information 30 that marks the nucleus of the cell and the focus information 41 which is an indicator indicating the focus state is superimposed on the image plane and observed simultaneously with the optical image 10.

As described above, according to the present embodiment, the microscope system 1 can notify the microscope user of the focus state of the imaging device 120 while supporting the work of the microscopic user by displaying an image analysis result in such a way as to be superimposed on the optical image 10. In particular, as the focus state is visualized as an indicator such as the focus information 41, the microscope user can more intuitively grasp the focus state of the imaging device 120.

### (Second Embodiment)

FIG. 6 is an example of an image observed through the ocular lens 113 according to the present embodiment. Hereinafter, image projection processing according to the present embodiment will be described with reference to FIG. 6.

In the image projection processing according to the present embodiment, focus information generated in step S13 is different from that in the image projection processing according to the first embodiment. The other points are similar to those of the image projection processing according to the first embodiment.

Specifically, in step S13, the control device 200 generates the focus information in such a way that a calculated contrast value is visualized as text information. It is sufficient if conversion from the contrast value to the text information is performed according to a predetermined rule. For example, if the contrast value is equal to or greater than a threshold, text information indicating that the imaging device 120 is focused on a specimen S may be generated, and if the contrast value is less than the threshold, text information indicating that the imaging device 120 is not focused on the specimen S may be generated. Furthermore, the text information is not limited to the information indicating whether or not the focus state is the in-focus state or the out-of-focus state, and may indicate how focused the imaging device 120 is, that is, the focus level. Furthermore, the text information may be a combination thereof. The focus information only needs to include the text information, and may include additional information, for example, the indicator described in the first embodiment, in addition to the text information.

FIG. 6 illustrates a state in which an auxiliary image 22 including analysis information 30 that marks a nucleus of a cell and focus information 42 which is text information indicating the focus state is superimposed on the image plane and observed simultaneously with an optical image 10. In this example, the focus information 42 indicates that the imaging device 120 is focused on the specimen S.

According to the present embodiment, the microscope system 1 can also notify the microscope user of the focus state of the imaging device 120 while supporting the work of the microscopic user by displaying an image analysis result in such a way as to be superimposed on the optical image 10.

### (Third Embodiment)

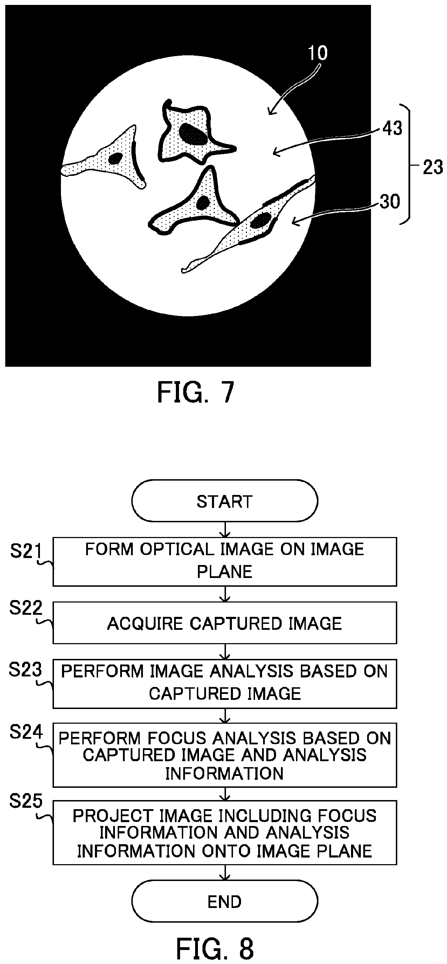

FIG. 7 is an example of an image observed through the ocular lens 113 according to the present embodiment. Hereinafter, image projection processing according to the present embodiment will be described with reference to FIG. 7.

In the image projection processing according to the present embodiment, focus information generated in step S13 is different from that in the image projection processing according to the first embodiment. The other points are similar to those of the image projection processing according to the first embodiment.

Specifically, in step S13, the control device 200 generates focus information in such a way that the focus information is visualized as focus peaking information that marks a region having a higher focus level than other regions. For example, the focus peaking information may be generated by calculating a contrast value for each small region (for example, for each several pixels) in a captured image and comparing the contrast value with a contrast value of another region. The focus information only needs to include the focus peaking information, and may include additional information in addition to the focus peaking information, for example, the indicator described in the first embodiment and the text information described in the second embodiment.

FIG. 7 illustrates a state in which an auxiliary image 23 including analysis information 30 that marks a nucleus of a cell and focus information 43 which is focus peaking information indicating the focus state is superimposed on the image plane and observed simultaneously with an optical image 10. In this example, the focus information 43 indicates that the imaging device 120 is focused on the specimen S in the vicinity of the center of the visual field, whereas the imaging device 120 is not sufficiently focused on the specimen S in the peripheral portion of the visual field.

According to the present embodiment, the microscope system 1 can also notify the microscope user of the focus state of the imaging device 120 while supporting the work of the microscopic user by displaying an image analysis result in such a way as to be superimposed on the optical image 10. In particular, as the focus state is visualized as the focus peaking information such as the focus information 43, the microscope user can distinguish between a focused region and a non-focused region even in a case where the focus level differs depending on the position in the visual field.

### (Fourth Embodiment)

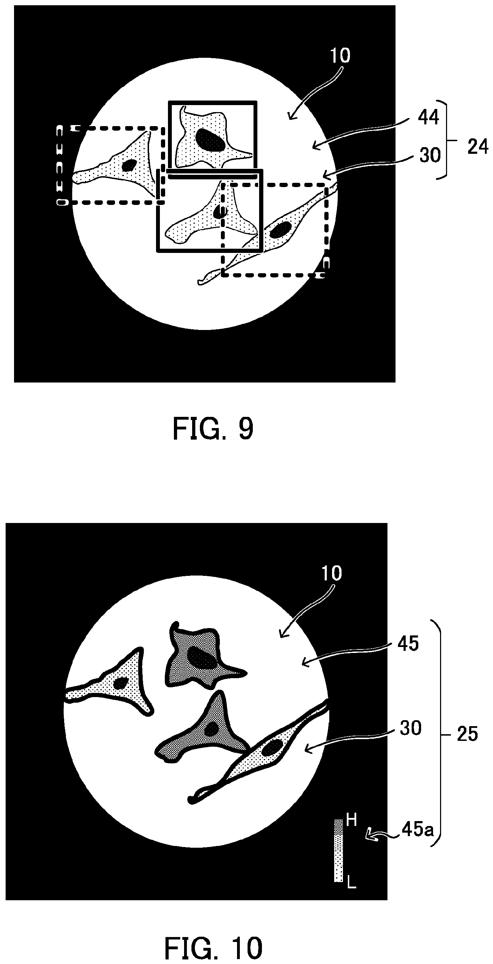

FIG. 8 is an example of a flowchart of image projection processing according to the present embodiment. FIG. 9 is an example of an image observed through the ocular lens according to the present embodiment. Hereinafter, the image projection processing according to the present embodiment will be described with reference to FIGS. 8 and 9.

When the microscope system 1 starts the image projection processing illustrated in FIG. 8, first, the observation optical system 110 forms an optical image of a specimen S on the image plane P (step S21), and the imaging device 120 acquires a captured image of the specimen S (step S22). The processing in steps S21 and S22 is similar to the processing of steps S11 and S12 illustrated in FIG. 3.

Next, the control device 200 performs the image analysis based on the captured image and generates the analysis information (step S23). In step S23, the control device 200 performs, for example, inference processing of detecting a cell and a cell nucleus in the captured image, on the captured image. Then, the control device 200 generates, as the analysis information, information for marking the detected cell nucleus and a figure indicating the position of the detected cell, specifically, a bounding box. More specifically, the control device 200 may generate information for marking the cell nucleus by segmentation and generate a bounding box by object detection.

Thereafter, the control device 200 performs the focus analysis based on the captured image and the analysis information generated in step S23 to generate focus information (step S24). In step S24, the control device 200 calculates a contrast value from the captured image for each cell region in the captured image detected by the inference processing of step S23, for example. Then, the control device 200 determines, as the color of the bounding box, a color corresponding to the calculated contrast value. That is, information including the color of the bounding box is generated as the focus information.

Once the focus information and the analysis information are generated, the control device 200 controls the projection device 131 to project an image including the focus information and the analysis information onto the image plane P (step S25). Here, the control device 200 outputs image data including the analysis information generated in step S23 and the focus information generated in step S24 to the projection device 131, so that the projection device 131 projects an auxiliary image 24 onto the image plane P as illustrated in FIG. 9.

FIG. 9 illustrates a state in which the auxiliary image 24 including analysis information 30 that marks the nucleus of the cell and a bounding box 44 indicating the position of the cell and color-coded according to the focus state for each cell is superimposed on the image plane and observed simultaneously with an optical image 10. Information regarding the position indicated by the bounding box 44 is an example of the analysis information, similarly to the analysis information 30. Furthermore, information regarding the color of the bounding box 44 is an example of the focus information. In FIG. 9, for convenience of explanation, a difference in color is represented by a difference in line type. In this example, the bounding box 44 indicates the focus state for each cell.

According to the present embodiment, the microscope system 1 can also notify the microscope user of the focus state of the imaging device 120 while supporting the work of the microscopic user by displaying an image analysis result in such a way as to be superimposed on the optical image 10. In particular, the focus information can be superimposed on the same space as the analysis information by color-coding the bounding box which is the image analysis result according to the focus state. Therefore, it is possible to avoid a situation in which the auxiliary image excessively occupies a region on the image plane P, which makes observation of the optical image 10 difficult.

### (Fifth Embodiment)

FIG. 10 is an example of an image observed through the ocular lens according to the present embodiment. Hereinafter, image projection processing according to the present embodiment will be described with reference to FIG. 10.

In the image projection processing according to the present embodiment, analysis information generated in step S23 and focus information generated in step S24 are different from those in the image projection processing according to the fourth embodiment. The other points are similar to those of the image projection processing according to the fourth embodiment.

Specifically, in step S23, the control device 200 performs, for example, inference processing of detecting a cell and a cell nucleus in a captured image, on the captured image. This point is similar to that of the fourth embodiment. However, in the present embodiment, the control device 200 generates information for marking the detected cell nucleus (analysis information 30) and information for marking the detected cell (information 45) by segmentation.

Furthermore, in step S24, for example, the control device 200 calculates a contrast value from the captured image for each cell region in the captured image detected by the inference processing of step S23. This point is similar to that of the fourth embodiment. However, in the present embodiment, the control device 200 determines, as the color of the information (information 45) for marking the detected cell, a color corresponding to the calculated contrast value. That is, color-coding of segmentation generally performed according to a category is performed according to the focus state. Furthermore, the control device 200 may further generate a legend 45a indicating a relationship between the color-coding and the focus state.

FIG. 10 illustrates a state in which the analysis information 30 that marks the nucleus of the cell, the information 45 that marks the cell and is color-coded according to the focus state for each cell, and an auxiliary image 25 including the legend 45a are superimposed on the image plane and observed simultaneously with an optical image 10. Information regarding the position indicated by the information 45 is an example of the analysis information, similarly to the analysis information 30. Information regarding the color indicated by the information 45 is an example of the focus information.

According to the present embodiment, the microscope system 1 can also notify the microscope user of the focus state of the imaging device 120 while supporting the work of the microscopic user by displaying an image analysis result in such a way as to be superimposed on the optical image 10. Further, the fifth embodiment is similar to the fourth embodiment in that the focus information can be superimposed on the same space as the analysis information by color-coding the image analysis result according to the focus state.

### (Sixth Embodiment)

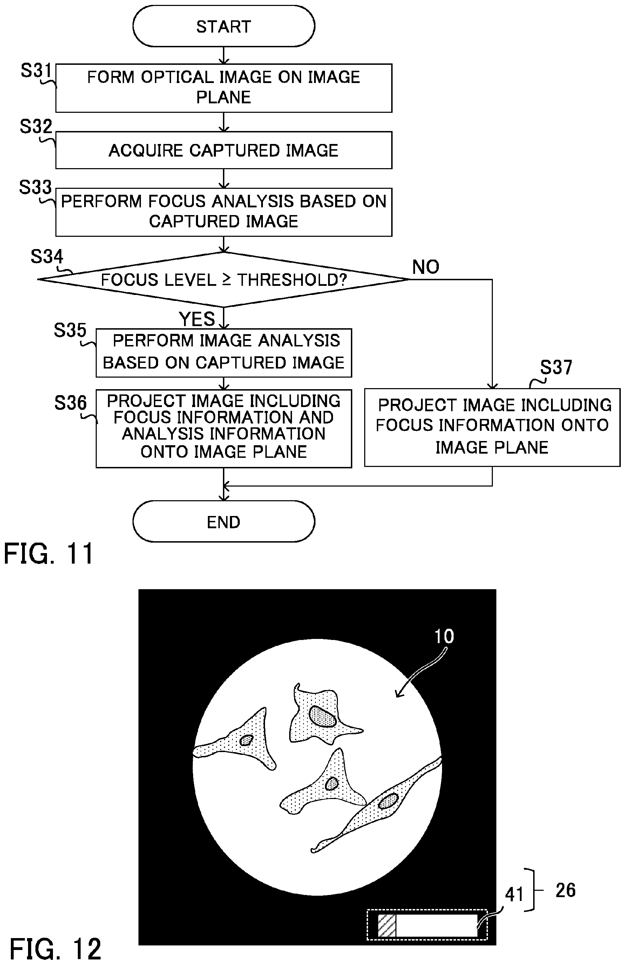

FIG. 11 is an example of a flowchart of image projection processing according to the present embodiment. FIG. 12 illustrates an example of an image observed through the ocular lens in a case where the focus level is not sufficient. Hereinafter, the image projection processing according to the present embodiment will be described with reference to FIGS. 11 and 12.

When the microscope system 1 starts the image projection processing illustrated in FIG. 11, first, the observation optical system 110 forms an optical image of a specimen S on the image plane P (step S31), the imaging device 120 acquires a captured image of the specimen S (step S32), and the control device 200 performs the focus analysis based on the captured image (step S33). The processing from step S31 to step S33 is similar to the processing from step S11 to step S13 illustrated in FIG. 3.

Thereafter, the control device 200 determines whether or not the focus level of the imaging device 120 is equal to or higher than a threshold (step S34), and varies subsequent processing according to the determination result. The threshold may be a focus level at which it can be determined that the imaging device 120 is focused on the specimen S.

In a case where it is determined that the focus level is equal to or higher than the threshold (step S34: YES), the control device 200 performs the image analysis based on the captured image (step S35). Thereafter, the control device 200 controls the projection device 131 to project an image including the focus information generated in step S33 and the analysis information generated in step S35 onto the image plane P (step S36). The processing in steps S35 and S36 is similar to the processing in steps S14 and S15 illustrated in FIG. 3. In step S36, the microscope user can observe the image illustrated in FIG. 5, for example.

On the other hand, in a case where it is determined that the focus level is not equal to or higher than the threshold (step S34: NO), the control device 200 does not perform the image analysis and controls the projection device 131 to project an image including the focus information generated in step S33 onto the image plane P (step S37). Consequently, for example, an auxiliary image 26 including only the focus information 41 as illustrated in FIG. 12 is projected onto the image plane P by the projection device 131.

According to the present embodiment, the microscope system 1 can support the work of the microscopic user by displaying the image analysis result in such a way as to be superimposed on the optical image 10 only in a state where the focus level of the imaging device 120 is high to some extent. Therefore, it is possible to avoid provision of an image analysis result with low reliability based on the blurred captured image to the microscope user. In addition, in the microscope system 1, even when the focus level of the imaging device 120 is low, the focus information is displayed in such a way as to be superimposed on the optical image 10. Therefore, the microscope user can recognize an out-of-focus of the imaging device 120 by checking the focus information, and the microscope system 1 can prompt the microscope user to perform an operation to eliminate the out-of-focus.

In the present embodiment, an example in which the indicator indicating the focus state is displayed as the focus information has been described as in the first embodiment. However, text information indicating the focus state may be displayed as the focus information as in the second embodiment, or focus peaking information indicating the focus state may be displayed as the focus information as in the third embodiment.

### (Seventh Embodiment)

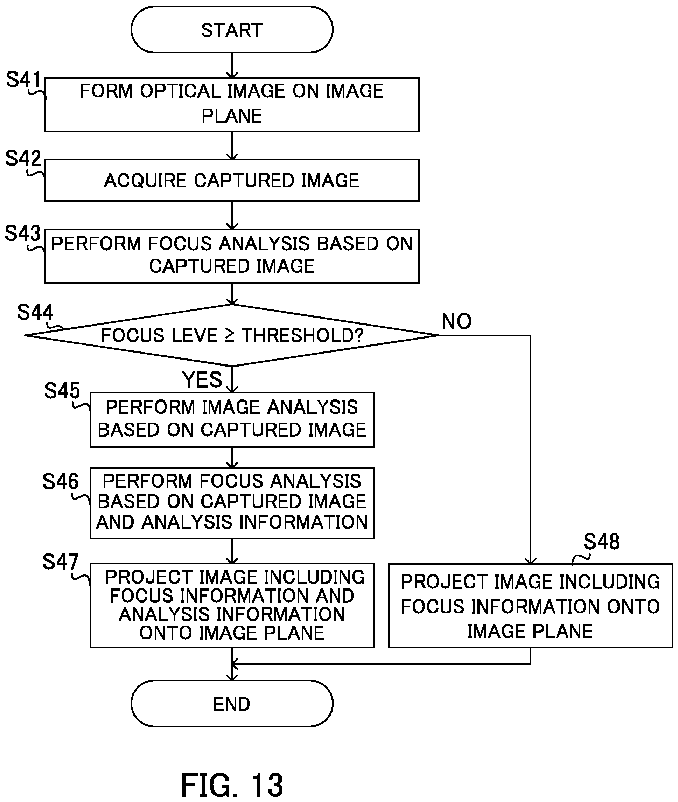

FIG. 13 is an example of a flowchart of image projection processing according to the present embodiment. Hereinafter, the image projection processing according to the present embodiment will be described with reference to FIG. 13.

When the microscope system 1 starts the image projection processing illustrated in FIG. 13, first, the observation optical system 110 forms an optical image of a specimen S on the image plane P (step S41), and the imaging device 120 acquires a captured image of the specimen S (step S42). The processing in steps S41 and S42 is similar to the processing in steps S21 and S22 illustrated in FIG. 8.

Next, the control device 200 performs the focus analysis based on the captured image (step S43). This point is different from the image projection processing illustrated in FIG. 8. The focus analysis in step S33 is similar to, for example, step S13 of the image projection processing illustrated in FIG. 3.

Thereafter, the control device 200 determines whether or not the focus level of the imaging device 120 is equal to or higher than a threshold (step S44), and varies subsequent processing according to the determination result. This processing is similar to step S34 of the image projection processing illustrated in FIG. 11. The threshold may be a focus level at which it can be determined that the imaging device 120 is focused on the whole specimen S.

In a case where it is determined that the focus level is equal to or high than the threshold (step S44: YES), the control device 200 performs the image analysis based on the captured image (step S45), and further performs the focus analysis based on the captured image and the analysis information generated in step S45 (step S46). Thereafter, the control device 200 controls the projection device 131 to project an image including the focus information generated in step S46 and the analysis information generated in step S45 onto the image plane P (step S47). The processing from step S45 to step S47 is similar to the processing from step S23 to step S25 illustrated in FIG. 8. In step S47, the microscope user can observe the image illustrated in FIG. 9, for example.

On the other hand, in a case where it is determined that the focus level is not equal to or higher than the threshold (step S44: NO), the control device 200 does not perform the image analysis, and controls the projection device 131 to project an image including the focus information generated in step S43 onto the image plane P (step S48). Consequently, for example, an auxiliary image 26 including only the focus information 41 as illustrated in FIG. 12 is projected onto the image plane P by the projection device 131.

According to the present embodiment, similarly to the sixth embodiment, the microscope system 1 can support the work of the microscopic user by displaying the image analysis result in such a way as to be superimposed on an optical image 10 only in a state where the focus level of the imaging device 120 is high to some extent. Therefore, it is possible to avoid provision of an image analysis result with low reliability based on the blurred captured image to the microscope user. In addition, even when the focus level of the imaging device 120 is low, the focus information is displayed in such a way as to be superimposed on the optical image 10. Therefore, the microscope user can recognize an out-of-focus of the imaging device 120 by checking the focus information, that is, in the present embodiment, the microscope system 1 can prompt the microscope user to perform an operation to eliminate the out-of-focus, which is similar to the sixth embodiment. Furthermore, in the present embodiment, in a case where the focus level reaches a certain level, the microscope system 1 can provide the microscope user with the focus information for each detection target (a cell in this example) together with the analysis information. As a result, the microscope user can further adjust the focus according to a target to be observed with particular attention.

In the present embodiment, an example in which a bounding box is displayed as the analysis information as in the fourth embodiment has been described. However, processing of coloring a cell to be detected by the image analysis as in the fifth embodiment may also be performed.

### (Eighth Embodiment)

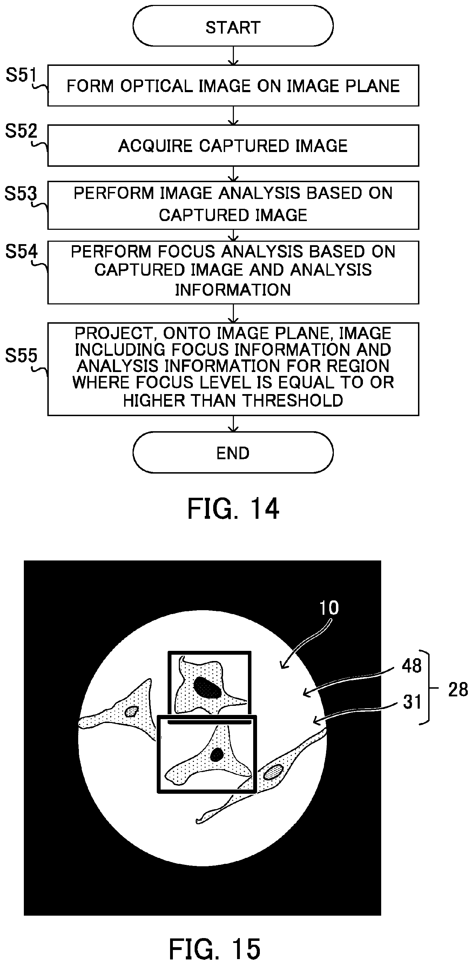

FIG. 14 is an example of a flowchart of image projection processing according to the present embodiment. FIG. 15 is an example of an image observed through the ocular lens according to the present embodiment. Hereinafter, the image projection processing according to the present embodiment will be described with reference to FIGS. 14 and 15.

When the microscope system 1 starts the image projection processing illustrated in FIG. 14, first, the observation optical system 110 forms an optical image of a specimen S on the image plane P (step S51), and the imaging device 120 acquires a captured image of the specimen S (step S52). Furthermore, the control device 200 performs the image analysis based on the captured image (step S53), and performs the focus analysis based on the captured image and the analysis information generated in step S53 (step S54). The processing from step S51 to step S54 is similar to the processing from step S21 to step S24 illustrated in FIG. 8.

Thereafter, the control device 200 controls the projection device 131 to project an image including the focus information and the analysis information onto the image plane P for a region where the focus level is equal to or higher than a threshold (step S55). Here, the control device 200 determines a range of the focus information and the analysis information to be projected onto the image plane based on the focus level specified for each region of a cell in the captured image detected by inference processing in step S53, and controls the projection device 131 to project an image including the focus information and the analysis information within the determined range onto the image plane P.

FIG. 15 illustrates a state in which an auxiliary image 28 including analysis information 31 that marks a nucleus of the cell and a bounding box 48 indicating the position of the cell and color-coded according to the focus state for each cell is superimposed on the image plane and observed simultaneously with an optical image 10. As can be clearly understood by comparison with FIG. 9, in FIG. 15, the analysis information 31 and the bounding box 48 are displayed only for cells having a high focus level.

According to the present embodiment, the microscope system 1 can support the work of the microscopic user by displaying the image analysis result in such a way as to be superimposed on the optical image 10 only for a region where the focus level of the imaging device 120 is high to some extent. Therefore, it is possible to avoid provision of an image analysis result with low reliability based on the blurred region in the captured image to the microscope user. In addition, by displaying the image analysis result only for a region where the focus level is high, it is possible to partially provide the image analysis result to the microscope user even in a case where the focus level varies in the captured image or in a case where the focus level is not sufficiently high in the entire captured image.

The above-described embodiments illustrate specific examples in order to facilitate understanding of the invention, and the present invention is not limited to these embodiments. Modifications obtained by modifying the above-described embodiments and alternatives to the above-described embodiments may also be included. That is, the constituent elements of each embodiment can be modified without departing from the spirit and scope of the embodiment. Moreover, new embodiments can be implemented by appropriately combining a plurality of constituent elements disclosed in one or more of the embodiments. Furthermore, some constituent elements may be omitted from the constituent elements in each embodiment, or some constituent elements may be added to the constituent elements in each embodiment. Further, the order of the processing procedure disclosed in each embodiment may be changed as long as no contradiction results. That is, the microscope system, the projection unit, and the image projection method according to the present invention can be variously modified or altered without departing from the scope of the claims.

In each embodiment described above, the projection device 131 is exemplified as an example of the superimposition device. However, the microscope system may include, as the superimposition device, a transmissive liquid crystal element disposed on the optical path between the objective lens 111 and the ocular lens 113. The transmissive liquid crystal element may be disposed at the image plane on which an optical image is formed, so that an image displayed by the transmissive liquid crystal element is superimposed directly on the optical image.

Furthermore, in the above-described embodiment, an example has been described in which the focus information is superimposed on the image plane regardless of the focus state. However, the focus information may be superimposed on the image plane only when the focus state is the out-of-focus state, and the focus information may be superimposed on the image plane with a reduced contrast, for example, so that the focus information is inconspicuous when the focus state is the in-focus state.

Furthermore, in the above-described embodiment, an example has been described in which the focus information is superimposed on the image plane regardless of the focus state. However, the focus information having a large size may be superimposed on the image plane when the focus state is the out-of-focus state, and the focus information having a small size may be superimposed on the image plane when the focus state is the in-focus state. By superimposing the focus information having a large size on the image plane when in the out-of-focus state, it is possible to strongly urge the microscope user to adjust the focus.

Furthermore, in the above-described embodiment, an example of generating the focus information from one captured image has been described. In a case where the focus state cannot be specified or the focus state is the out-of-focus state, a message prompting the operation of the focusing handle 103 may be projected onto the image plane. The imaging device 120 may acquire a plurality of captured images at different Z positions by operating the focusing handle 103 to generate the focus information in which the focus state is more accurately specified.

In addition, the focus state may be specified at at least nine points (upper left, upper center, upper right, middle left, middle center, middle right, lower left, lower center, and lower right) in the visual field, and the inclination of the specimen S may be detected from the focus states at the nine points. In a case where the inclination of the specimen S is detected, information indicating that the specimen S is inclined may be displayed on the image plane to prompt the microscopic user to horizontally arrange the specimen.

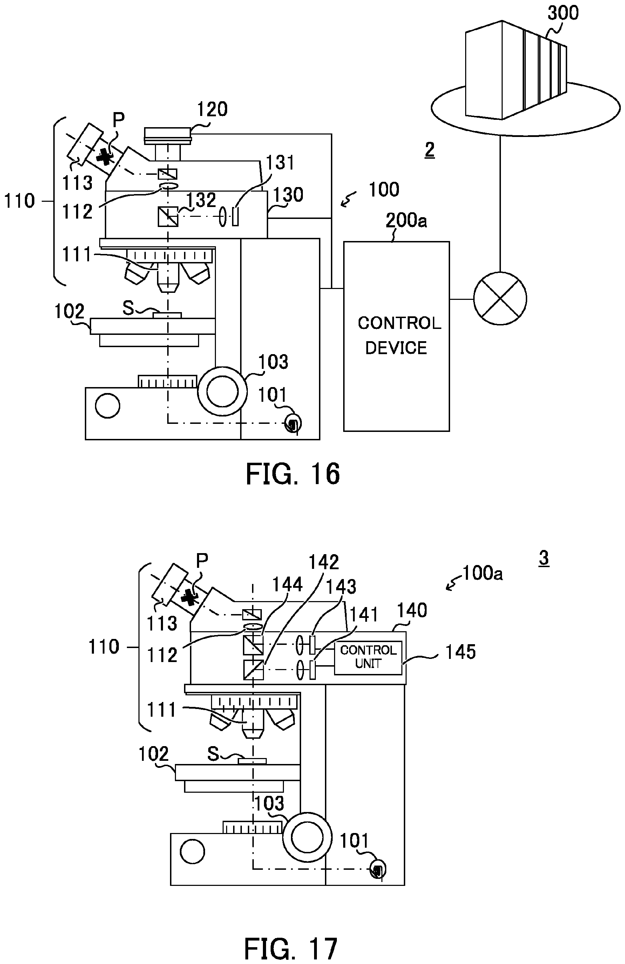

FIG. 16 is a diagram illustrating a configuration of a microscope system 2 according to another embodiment. In the above-described embodiment, an example has been described in which the control device 200 included in the microscope system 1 performs the focus analysis and the image analysis to generate the focus information and the analysis information. However, it is sufficient if a control device included in the microscope system may control a projection device 131 to project focus information and analysis information on an image plane on which an optical image is formed, and the focus information and the analysis information may be acquired from another device instead of being generated by the control device.

As illustrated in FIG. 16, the microscope system 2 may include a control device 200a that communicates with an external system 300. The control device 200a may or does not have to generate at least one of the focus information or the analysis information based on a captured image. The control device 200a may request the external system 300 to perform at least one of the focus analysis or the image analysis by transmitting the captured image to the external system 300, and acquire the processing result from the external system 300.

Similarly to the microscope system 1 described above, the microscope system 2 can also cope with an out-of-focus of an imaging device 120 in an AR microscope (a microscope 100).

FIG. 17 is a diagram illustrating a configuration of a microscope system 3 according to still another embodiment. In the above-described embodiment, an example has been described in which the control device 200 different from the microscope 100 controls processing of projecting an auxiliary image. However, the processing of projecting an auxiliary image may be performed by a projection unit for a microscope system attached to a microscope.

As illustrated in FIG. 17, the microscope system 3 may include a projection unit 140 including both an imaging device 141 and a projection device 143. The projection unit 140 includes a beam splitter 142 that guides light from an observation optical path to the imaging device 141, and a beam splitter 144 that combines light from the projection device 143 with the observation optical path. In addition, the projection unit 140 includes a control unit 145 that functions similarly to the control device 200 in the microscope system 1. That is, the control unit 145 is an example of the control device and controls the projection device 143 to project focus information and analysis information on an image plane P based on a captured image acquired by the imaging device 141.

Similarly to the microscope system 1 described above, the projection unit 140 can also cope with an out-of-focus of the imaging device 141 in an AR microscope (a microscope 100a).

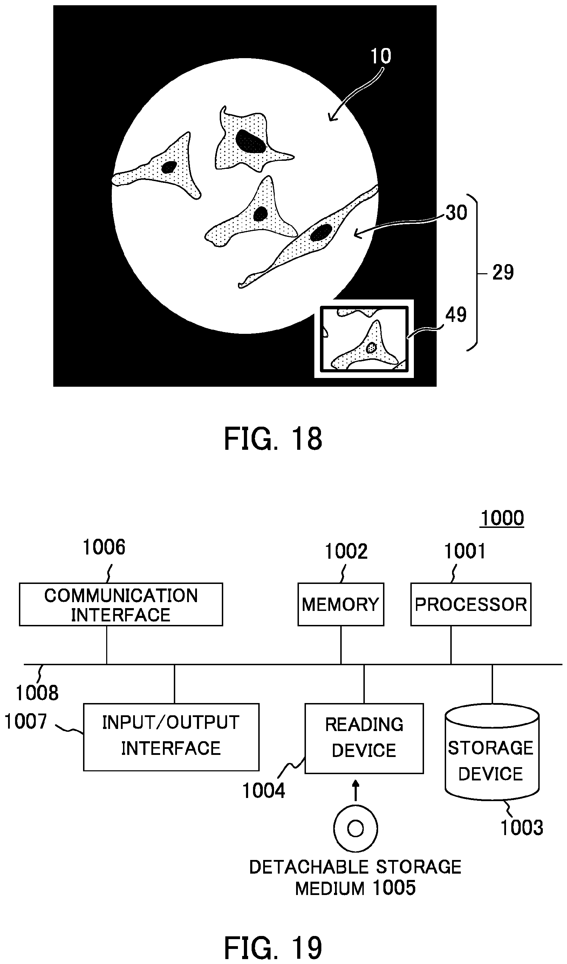

FIG. 18 illustrates an example of an image observed through an ocular lens according to a modified example. In the above-described embodiment, an example has been described in which the focus information is generated by performing the focus analysis on the captured image. However, the focus information may be any information regarding the focus state of the imaging device 120, and may be at least a part of the captured image. The focus information may be, for example, the captured image itself or a part of the captured image near the center of the visual field. As illustrated in FIG. 18, the control device may control the projection device 131 to project an auxiliary image 29 including analysis information 30 and (at least a part of) a captured image 49 acquired by the imaging device 120 onto the image plane P. Also in this case, since the microscope user can recognize an out-of-focus of the imaging device 120 from the captured image, the microscope user can cope with the out-of-focus.

FIG. 19 is a diagram illustrating a hardware configuration of a computer 1000 for implementing the above described control device. The hardware configuration illustrated in FIG. 19 includes, for example, a processor 1001, a memory 1002, a storage device 1003, a reading device 1004, a communication interface 1006, and an input/output interface 1007. The processor 1001, the memory 1002, the storage device 1003, the reading device 1004, the communication interface 1006, and the input/output interface 1007 are connected to one another, for example, via a bus 1008.

The processor 1001 is any electric circuit. For example, the processor 1001 may be a single processor, a multiprocessor, or a multi-core processor. The processor 1001 reads out a program stored in the storage device 1003 and executes the program, to execute the above-described image projection processing.

The memory 1002 is, for example, a semiconductor memory and may include a RAM area and a ROM area. The storage device 1003 is, for example, a hard disk, a semiconductor memory, such as a flash memory, or an external storage device.

For example, the reading device 1004 accesses a storage medium 1005, in accordance with an instruction from the processor 1001. For example, the storage medium 1005 is implemented by a semiconductor device, a medium to or from which information is input or output due to a magnetic effect, or a medium to or from which information is input or output due to an optical effect. Note that such a semiconductor device is, for example, a universal serial bus (USB) memory. Such a medium to and from which information is input and output by a magnetic effect is, for example, a magnetic disk. Such a medium to and from which information is input and output by an optical effect is, for example, a compact disc (CD)-ROM, a digital versatile disc (DVD), or a Blu-ray disc (Blu-ray is a registered trademark).

For example, the communication interface 1006 communicates with other devices, in accordance with an instruction from the processor 1001. The input/output interface 1007 is, for example, an interface between an input device and an output device. For example, the input device may be a device that receives an instruction from a user, such as a keyboard, a mouse, or a touch panel. The output device is, for example, a display device such as a display, or a sound device such as a speaker.

For example, the program that the processor 1001 executes is provided to the computer 1000 in the following forms:
(1) Installed in the storage device 1003 in advance
(2) Provided by the storage medium 1005.
(3) Provided from a server such as a program server

Note that the hardware configuration of the computer 1000 for implementing the control device described with reference to FIG. 19 is exemplary and thus the embodiment is not limited thereto. For example, a part of the configuration described above may be omitted or a new configuration may be added to the configuration described above. In another embodiment, for example, some or all of the functions of the electric circuit described above may be implemented as hardware based on a field programmable gate array (FPGA), a system-on-a-chip (SoC), an application specific integrated circuit (ASIC) or a programmable logic device (PLD).

In the present specification, the expression "based on A" does not indicate "based on only A" but indicates "based on at least A" and further indicates "based partially on at least A". That is, "based on A" may indicate "based on B in addition to A" or "based on a part of A".

## Claims

1. A microscope system comprising:
an observation optical system that forms an optical image of a specimen on an object side of an ocular lens;
a superimposition device that superimposes information on an image plane on which the optical image is formed;
an imaging device that is provided on an imaging optical path branched from an optical path of the observation optical system; and
a control device that controls the superimposition device to superimpose, on the image plane, focus information regarding a focus state of the imaging device based on a captured image of the specimen acquired by the imaging device, and analysis information regarding a result of image analysis on the captured image, the image analysis being different from focus analysis.

2. The microscope system according to claim 1, wherein
the control device controls the superimposition device to superimpose an image including both the focus information and the analysis information on the image plane.

3. The microscope system according to claim 1, wherein
the control device controls the superimposition device to superimpose an image including the analysis information on the image plane when the focus state of the imaging device satisfies a predetermined condition, and controls the superimposition device to superimpose an image that does not include the analysis information on the image plane when the focus state of the imaging device does not satisfy the predetermined condition.

4. The microscope system according to claim 1, wherein
the analysis information is information regarding a result of the image analysis for a region of the captured image in which the focus state of the imaging device satisfies a predetermined condition, and
the control device controls the superimposition device to superimpose an image including the analysis information on a region of the image plane that corresponds to the region of the captured image.

5. The microscope system according to claim 1, wherein
the control device generates at least one of the focus information or the analysis information based on the captured image.

6. The microscope system according to claim 1, wherein
the superimposition device is a projection device,
the microscope system further comprises an optical path combining element that joins light from the superimposition device to the optical path of the observation optical system.

7. The microscope system according to any one of claims 1 to 6, wherein
the focus information includes an indicator indicating the focus state.

8. The microscope system according to any one of claims 1 to 6, wherein
the focus information includes text information indicating the focus state.

9. The microscope system according to any one of claims 1 to 6, wherein
the focus information includes at least a part of the captured image.

10. The microscope system according to any one of claims 1 to 6, wherein
the image analysis different from the focus analysis includes inference processing of detecting an object in an image and a category of the object by using a neural network model trained by machine learning,
the analysis information includes a figure that specifies a position of an object of a predetermined category detected in the inference processing, and
the focus information includes a color of the figure that specifies the focus state for the object of the predetermined category detected by the inference processing.

11. The microscope system according to claim 10, wherein
the inference processing includes object detection.

12. The microscope system according to claim 10, wherein
the inference processing includes segmentation.

13. The microscope system according to any one of claims 1 to 6, wherein
the focus information includes focus peaking information for marking a region having a higher focus level than other regions.

14. A projection unit for a microscope system, the projection unit comprising:
a superimposition device that superimposes information on an image plane on which an optical image of a specimen is formed by an observation optical system included in the microscope system, the image plane being positioned on an object side of an ocular lens included in the microscope system;
an imaging device that is provided on an imaging optical path branched from an optical path of the observation optical system; and
a control device that controls the superimposition device to superimpose, on the image plane, focus information regarding a focus state of the imaging device based on a captured image of the specimen acquired by the imaging device, and analysis information regarding a result of image analysis on the captured image, the image analysis being different from focus analysis.

15. An image projection method executed by a microscope system including an observation optical system, the image projection method comprising:
forming an optical image of a specimen on an object side of an ocular lens included in the observation optical system; and
superimposing, on an image plane on which the optical image is formed, focus information regarding a focus state of an imaging device provided on an imaging optical path branched from an optical path of the observation optical system based on a captured image of the specimen acquired by the imaging device, and analysis information regarding a result of image analysis on the captured image, the image analysis being different from focus analysis.
